# EUROPÄISCHE PATENTSCHRIFT

(11) **EP 2 709 878 B1**
(45) Veröffentlichungstag und Bekanntmachung des Hinweises auf die Patenterteilung: **08.07.2015**
(21) Anmeldenummer: 12729341.3
(22) Anmeldetag: 15.05.2012
(51) Int. Cl.: B60R 22/40, B60R 22/405

(54) **GURTAUFROLLER MIT STEUERVERZAHNUNG**
BELT RETRACTOR WITH CONTROL TOOTHING
ENROULEUR DE CEINTURE À DENTURE DE COMMANDE

(30) Priorität: 18.05.2011 DE 102011101965
(43) Veröffentlichungstag der Anmeldung: 26.03.2014
(73) Patentinhaber: TRW Automotive GmbH, 73553 Alfdorf (DE)
(72) Erfinder: RINK, Jürgen, 73550 Waldstetten (DE); SIEBECK, Boris, 73527 Schwäbisch Gmünd (DE); SEHIC, Demal, 73525 Schwäbisch Gmünd (DE); KIELWEIN, Thomas, 73569 Eschach (DE); DÄUBER, Markus, 73035 Bartenbach (DE); MÜCKE, Christian, 73563 Mögglingen (DE); ADOMEIT, Julius, 10961 Berlin (DE)
(74) Vertreter: Prehn, Manfred
(86) Internationale Anmeldenummer: PCT/EP2012/002073
(87) Internationale Veröffentlichungsnummer: WO 2012/156074

(56) Entgegenhaltungen:
- GB-A- 2 247 154
- US-A- 4 186 895
- US-A- 5 333 906

## Beschreibung

Die Erfindung betrifft einen Gurtaufroller für einen Fahrzeug-Sicherheitsgurt, mit einem Rahmen, der mit mehreren Blockierzähnen versehen ist, einer Gurtspule, die drehbar im Rahmen gelagert ist und eine Blockierverzahnung aufweist, die in Eingriff mit den Blockierzähnen gebracht werden kann, einem Steuerhebel, der schwenkbar am Rahmen gelagert ist und die Gurtspule aufnimmt, und einem Sensor, der bei Überschreiten einer vorgegebenen Fahrzeugverzögerung auslöst.

Bei diesem Typ von Gurtaufroller wird, wenn die Gurtspule blockiert werden soll, sie so relativ zum Rahmen verlagert, dass die an ihr angebrachte Verzahnung in Eingriff mit den Blockierzähnen gelangt, die am Rahmen vorgesehen sind. Zu diesem Zweck ist ein Steuermechanismus vorgesehen, der dafür sorgt, dass die Verzahnung der Gurtspule lagerichtig in die Blockierzähne des Rahmens eingesteuert wird, sodass ein Eingriff der Verzahnung in die Blockierzähne hergestellt ist, bevor auf die Gurtspule hohe Lasten einwirken.

Für die gurtbandsensitive Blockierung enthält der Steuermechanismus einen Steuerhebel, der üblicherweise mit einer Innenverzahnung versehen ist, in die eine Steuerklinke eingreifen kann, die an einer Stirnseite der Gurtspule angeordnet ist. Die Steuerklinke wird bei einer gurtbandsensitiven Auslösung durch die Ausnutzung von Massenträgheitskräften so aus einer Ausgangsstellung nach außen verschwenkt, dass sie in die Innenverzahnung eingreift. Dadurch ist die Gurtspule nicht mehr frei drehbar, sondern mit dem Steuerhebel gekoppelt.

GB 2 247 154 A beschreibt ein Gurtaufroller gemäß den Oberbegriff des Patentanspruchs 1.

Für die fahrzeugsensitive Blockierung enthält der Steuermechanismus eine Kupplungsscheibe, die drehfest mit der Gurtspule verbunden ist. In die Kupplungsscheibe greift ein Sensorhebel ein, wenn der Sensor bei Überschreiten einer vorgegebenen Fahrzeugverzögerung auslöst. Dadurch kann sich die Gurtspule nicht mehr frei drehen.

Wenn dann, also bei nicht mehr frei drehbarer Gurtspule, eine Zugkraft auf das Gurtband ausgeübt wird, führt dies dazu, dass der Steuerhebel zusammen mit der Gurtspule um den Schwenkpunkt schwenkt, an dem der Steuerhebel am Rahmen angebracht ist, und die Gurtspule in die Blockierzähne am Rahmen einsteuert. Die Anordnung der Zähne der Innenverzahnung am Steuerhebel und der Zähne der Kupplungsscheibe relativ zu den Blockierzähnen gewährleistet dabei, dass die Gurtspule grundsätzlich mit ihrer Verzahnung lagerichtig in die Blockierzähne geführt wird, sodass das Auftreffen der Zahnspitzen der Verzahnung der Gurtspule auf die Zahnspitzen der Blockierzähne vermieden ist.

Ein Nachteil des beschriebenen Sperrmechanismus besteht darin, dass bei einer dynamischen fahrzeugsensitiven Aktivierung des Blockiermechanismus sich die Kupplungsscheibe relativ zur Verzahnung der Gurtspule verdrehen oder verformen kann, was dazu führt, dass die Zuordnung der Blockierzähne zur Verzahnung der Gurtspule nicht mehr präzise aufrechterhalten wird. Dies kann dazu führen, dass die Verzahnung der Gurtspule nicht lagegenau in die Blockierzähne eingesteuert wird und der endgültige Eingriff bereits unter Last erfolgt.

Die Aufgabe der Erfindung besteht darin, einen Gurtaufroller der eingangs genannten Art dahingehend weiterzubilden, dass auch bei dynamischen Blockiervorgängen die Zuordnung der Verzahnung der Gurtspule zu den Blockierzähnen am Rahmen zuverlässig aufrechterhalten bleibt.

Zur Lösung dieser Aufgabe ist erfindungsgemäß bei einem Gurtaufroller der eingangs genannten Art vorgesehen, dass an der Gurtspule eine Steuerverzahnung vorgesehen ist, mit der der Sensor zusammenwirken kann Die Erfindung beruht auf dem Grundgedanken, bei der fahrzeugsensitiven Blockierung nicht den "Umweg" über die Kupplungsscheibe zu gehen, sondern die Gurtspule unmittelbar zu sperren. Zu diesem Zweck ist die Steuerverzahnung an der Gurtspule vorgesehen, wodurch die Kupplungsscheibe entfallen kann.

Gemäß einer bevorzugten Ausführungsform der Erfindung ist ein Zwischenhebel vorgesehen, der vom Sensor in die Steuerverzahnung eingesteuert werden kann. Der Zwischenhebel ist dabei vorzugsweise am Steuerhebel gelagert. Dies ermöglicht, ihn auch während der Schwenkbewegung der Gurtspule und des Steuerhebels zuverlässig in Eingriff mit der Steuerverzahnung der Gurtspule zu halten und die Gurtspule drehfest zu halten, da er mit dem Steuerhebel verschwenkt wird.

Vorzugsweise ist vorgesehen, dass die Blockierverzahnung und die Steuerverzahnung in axialer Richtung nebeneinander an einem Flansch der Gurtspule angeordnet sind. Dies führt zu einer kompakten Bauform.

Die Steuerverzahnung kann auf einer Scheibe angeordnet sein, die drehfest am Flansch gehalten ist. Die Scheibe kann separat hergestellt werden, was den Vorteil bietet, dass die Steuerverzahnung mit einer wesentlich größeren Genauigkeit hergestellt werden kann. Insbesondere können die Zähne der Steuerverzahnung annähernd radienfrei hergestellt werden. Dadurch kann der Zwischenhebel wesentlich exakter in die Steuerverzahnung eingreifen, wodurch das Ansprechverhalten der Gurtspulenblockierung verbessert werden kann. Da die Steuerverzahnung separat hergestellt wird, wodurch die Form der Gurtspule weniger aufwendig ist, ist die Herstellung der Gurtspule einfacher und somit günstiger. Aufgrund des einfacheren Aufbaus ist die Gurtspule auch unempfindlicher gegen Beschädigungen während des Transports oder der Fertigung.

Um die Scheibe drehfest mit dem Flansch zu verbinden, sind vorzugsweise an der Scheibe in axialer Richtung vorstehende Stege vorgesehen, die in axialer Richtung zwischen die Zähne der Blockierverzahnung eingreifen. Die Steuerverzahnung kann auf den Stegen angeordnet sein, so dass Blockierverzahnung und Steuerverzahnung in montiertem Zustand aneinander angrenzen.

Die Verbindung zwischen Scheibe und Gurtspule erfolgt vorzugsweise kraft- und formschlüssig.

Vorzugsweise haben die Blockierverzahnung und die Steuerverzahnung dieselbe Teilung und dieselbe Ausrichtung, wobei die Zähne der Steuer- verzahnung spitzer bzw. schmaler ausgeführt sind als die Zähne der Blockierverzahnung. Auf diese Weise steht zwischen den einzelnen Zähnen der Steuerverzahnung viel Platz zum Einsteuern des Zwischenhebels zur Verfügung, ohne dass das Risiko eines Zahnprellens besteht.

Vorzugsweise ist an der Gurtspule eine Steuerklinke vorgesehen, die gurtbandsensitiv in eine Innenverzahnung eingesteuert werden kann, die am Steuerhebel vorgesehen ist. Auf diese Weise lässt sich auf die bewährte, herkömmliche Art und Weise die gurtbandsensitive Blockierung der Gurtspule herbeiführen.

Gemäß einer Ausführungsform der Erfindung ist vorgesehen, dass der Rahmen mit zwei Seitenteilen versehen ist, die jeweils mit Blockierzähnen versehen sind, und dass die Gurtspule an beiden axialen Enden mit jeweils einer Blockierverzahnung versehen ist. Diese Ausgestaltung ermöglicht, die bei einer Blockierung der Gurtspule wirkenden Lasten gleichmäßig über die beiden Blockierverzahnungen an den axialen Enden der Gurtspule in den Rahmen abzuleiten.

Die Erfindung wird nachfolgend anhand einer Ausführungsform beschrieben, die in den beigefügten Zeichnungen dargestellt ist. In diesen zeigen:
- Figur 1 in einer schematischen, perspektivischen Ansicht einen erfindungsgemäßen Gurtaufroller im Ausgangszustand;
- Figur 2 den Gurtaufroller von Figur 1 in einer schematischen Seitenansicht;
- Figur 3 in einer Ansicht entsprechend derjenigen von Figur 1 den Gurtaufroller mit fahrzeugsensitiv blockierter Gurtspule;
- Figur 4 den Gurtaufroller von Figur 3 in einer Ansicht entsprechend derjenigen von Figur 2;
- Figur 5 die Verzahnungsseite der Gurtspule;
- Figur 6 eine zweite Ausführungsform einer Gurtspule für einen erfindungsgemäßen Gurtaufroller; und
- Figur 7 eine Detailansicht der Steuerverzahnung der Gurtspule aus Figur 6.

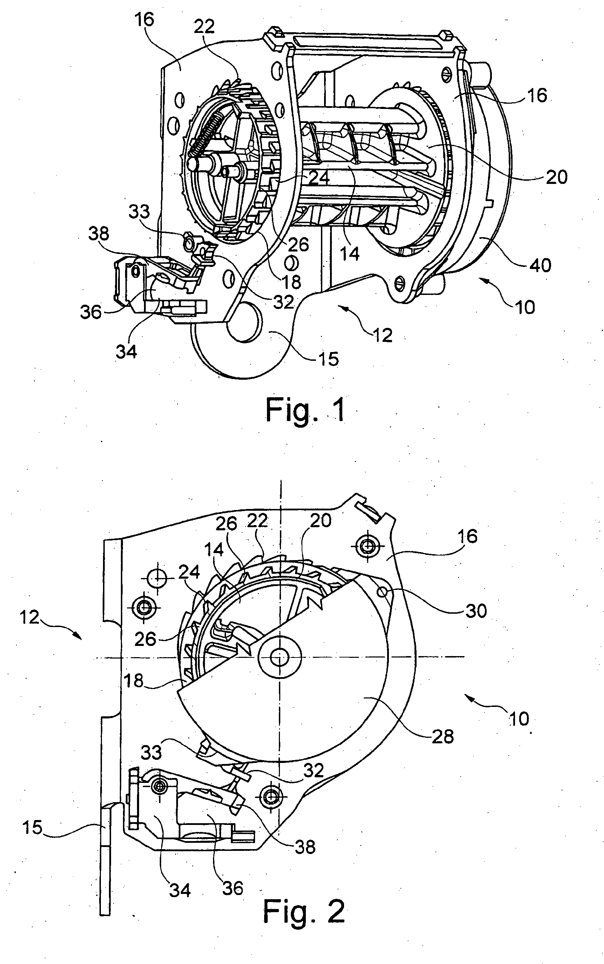

In den Figuren 1 und 2 ist ein Gurtaufroller 10 gezeigt, der einen Rahmen 12 und eine Gurtspule 14 enthält. Der Rahmen 12 weist ein Rückenteil 15 und zwei Seitenteile 16 auf, wobei jedes der beiden Seitenteile 16 mit einer Öffnung 18 versehen ist, innerhalb derer ein Flansch 20 aufgenommen ist, der jeweils an einem axialen Ende der Gurtspule vorgesehen ist. Der Rand jeder Öffnung 18 ist mit mehreren Blockierzähnen 22 versehen, deren Geometrie und Teilung abgestimmt ist auf eine Blockierverzahnung 24, die an jedem Flansch der Gurtspule 14 ausgebildet ist.

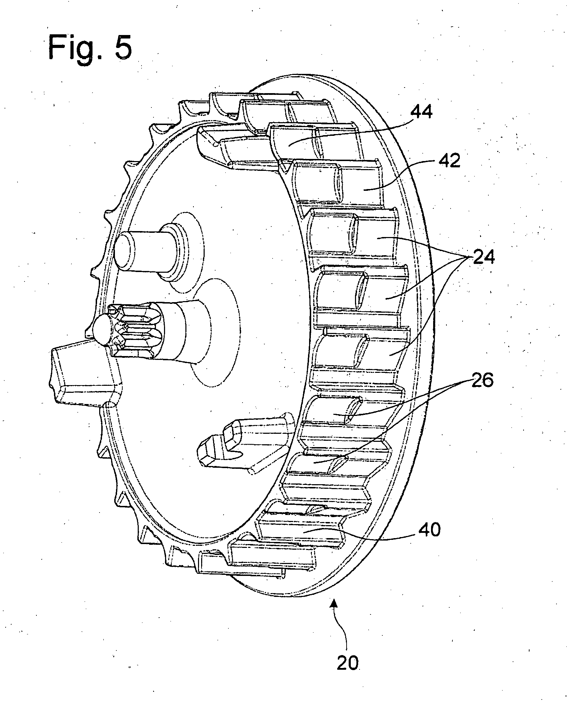

An einem der beiden Flansche 20 der Gurtspule 14 ist, in axialer Richtung betrachtet; unmittelbar neben der Blockierverzahnung 24 eine Steuerverzahnung 26 ausgebildet, die hinsichtlich ihrer Teilung und ihrer Anordnung in Umfangsrichtung betrachtet mit der Blockierverzahnung 24 übereinstimmt. Der Unterschied zwischen der Blockierverzahnung 24 und der Steuerverzahnung 26 besteht insbesondere in der Geometrie der Zahnrücken, wie dies in Figur 5 ersichtlich ist. Der Zahnradius der Sperrverzahnung und der Blockierverzahnung ist gleich. Ebenfalls gleich ist die Form der Zahnbrust 40, d.h. der lasttragenden Flanke der Zähne. Die Zahnrücken 42 der Blockierverzahnung 24 sind im Wesentlichen geradflächig und die Zahnstärke der Blockierverzahnung ist größer als die der Steuerverzahnung. Die Zahnrücken 44 der Steuerverzahnung 26 sind konkav ausgebildet, so dass insgesamt die Zahnstärke der Steuerverzahnung bei gleichem Zahnabstand gegenüber der Blockierverzahnung reduziert ist.

An einem der beiden Seitenteile 16 des Rahmens 12 des Gurtaufrollers 10 ist ein Steuerhebel 28 angeordnet, der nach Art einer Kappe die Steuerverzahnung 26 umgibt und mit einem Schwenkzapfen 30 schwenkbar am entsprechenden Seitenteil 16 des Rahmens 12 begrenzt schwenkbar angebracht ist. Der Steuerhebel 28 ist auf seiner Innenseite mit einer Innenverzahnung versehen, die für eine an sich bekannte gurtbandsensitive Blockierung der Gurtspule vorgesehen ist. Die Innenverzahnung und eine an der Gurtspule angeordnete Steuerklinke, die in die Innenverzahnung gurtbandsensitiv eingesteuert werden kann, sind hier nicht dargestellt.

Für die fahrzeugsensitive Sperrung ist am Steuerhebel 28 ein Zwischenhebel 32 schwenkbar gelagert (siehe das Lager 33). Dieser kann aus der in den Figuren 1 und 2 gezeigten Ausgangsstellung, in der er nicht in die Steuerverzahnung 26 eingreift, so verschwenkt werden, dass seine Spitze in die Steuerverzahnung 26 eingreift. Zum Verschwenken des Zwischenhebels 32 ist ein Sensor 34 vorgesehen, der von seiner grundsätzlichen Bauart her bekannt ist und fahrzeugsensitiv anspricht. Der Sensor 34 ist dabei so angeordnet, dass ein von einer Sensorkugel 36 betätigbarer Sensorhebel 38 den Zwischenhebel 32 aus der Ausgangsstellung in die Steuerverzahnung 26 einsteuern kann.

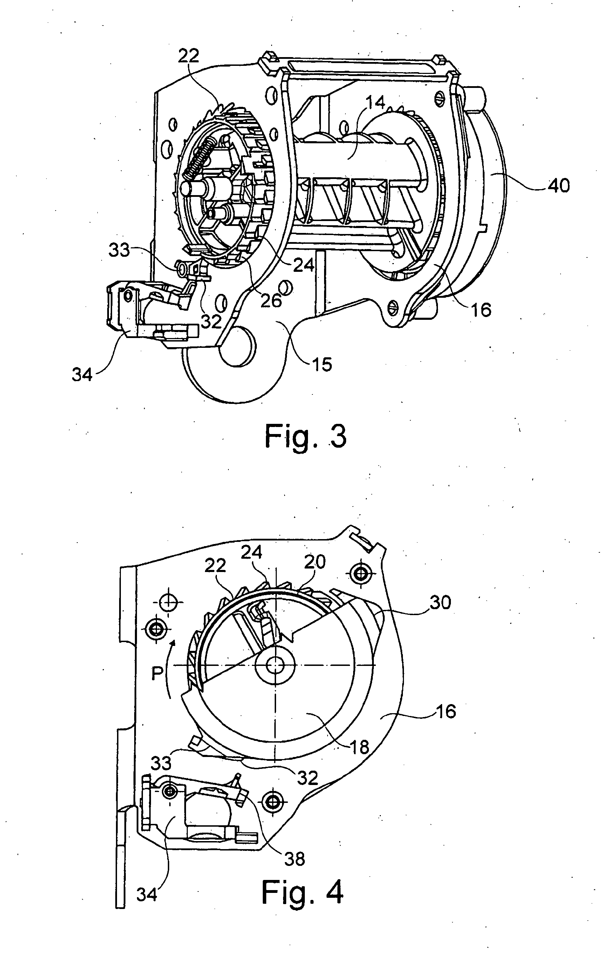

Solange sich der Zwischenhebel 32 in der in den Figuren 1 und 2 gezeigten Stellung befindet, kann sich die Gurtspule frei innerhalb der Öffnungen 18 der Seitenteile 16 des Rahmens 12 drehen (unter der Annahme, dass auch keine gurtbandsensitive Blockierung ausgelöst wurde). Dabei wird die Gurtspule von zwei Gehäuseschalen geführt, von denen in Figur 1 eine hintere Gehäuseschale 40 zu sehen ist. Wenn der fahrzeugsensitive Sensor 34 auslöst, wird der Zwischenhebel 32 vom Sensorhebel 38 so verstellt, dass die Spitze des Zwischenhebels 32 in die Steuerverzahnung 26 eingreift (siehe insbesondere Figur 3). Wenn in diesem Zustand ein Zug auf das Gurtband ausgeübt wird, wird die Gurtspule in der Richtung des Pfeils P von Figur 4 gedreht. Da der Zwischenhebel 32 sich unmittelbar am Steuerhebel 28 abstützt, führt der Zug am Gurtband dazu, dass die Gurtspule 14 zusammen mit dem Steuerhebel 28 in der Richtung des Pfeils P um den Schwenkzapfen 30 geschwenkt wird (siehe auch Figur 4, in der deutlich zu sehen ist, wie der Zwischenhebel 32, der in die Steuerverzahnung 26 eingreift, vom Sensorhebel 38 abgehoben wurde). Dadurch gelangt die Blockierverzahnung 24 in Eingriff mit den Blockierzähnen 22 des Rahmens, so dass die Gurtspule 14 zuverlässig relativ zum Rahmen 12 blockiert ist.

Die Anordnung des Zwischenhebels 32 am Steuerhebel 28 gewährleistet dabei, dass die Zähne der Blockierverzahnung 24 lagerichtig in die Blockierzähne 22 am Rahmen 12 eingesteuert werden. Durch die reduzierte Zahnstärke der Steuerverzahnung 26 vergrößert sich die für die Einsteuerung des Zwischenhebels 32 verfügbare Bogenlänge bei gleichem Zahnabstand. Somit wird eine schnellere bzw. bessere Einsteuerung erreicht.

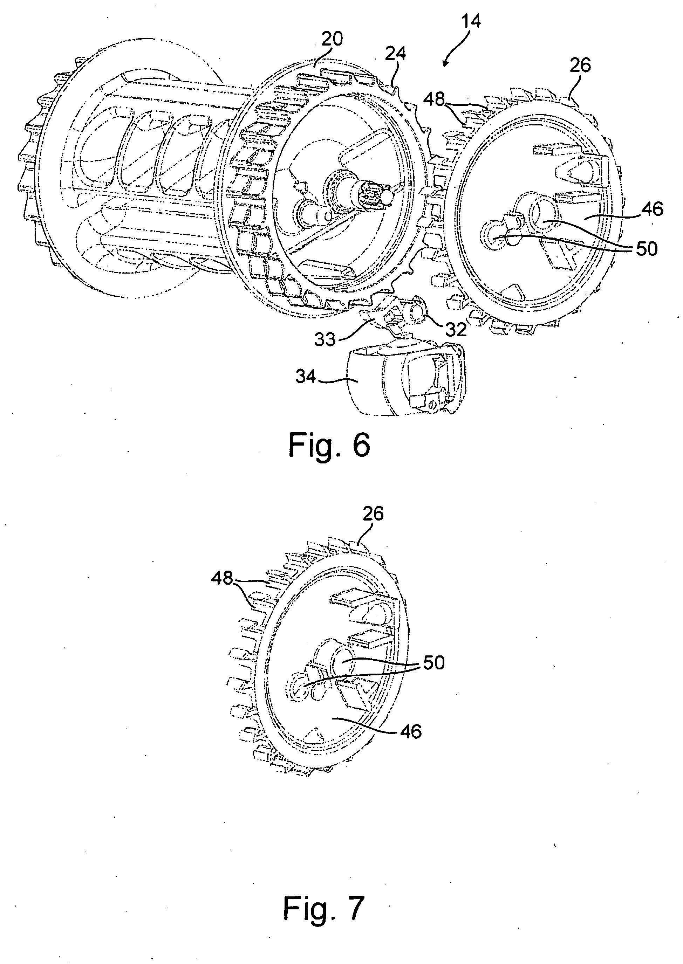

Eine zweite Ausführungsform eines erfindungsgemäßen Gurtaufrollers 10 ist in den Figuren 6 und 7 dargestellt. Der Aufbau dieses Gurtaufrollers 10 entspricht im Wesentlichen dem in den Figuren 1 bis 5 gezeigten Gurtaufroller 10. Im Gegensatz zu diesem ist die Steuerverzahnung 26 auf einer Scheibe 46 angeordnet, die drehfest mit dem Flansch 20 verbunden ist.

Auf der dem Flansch 20 zugewandten Seite hat die Scheibe 46 mehrere in axialer Richtung abstehende Stege 48. Die Zähne der Steuerverzahnung 26 sind auf den Stegen 48 angeordnet. Des Weiteren sind an der Scheibe 46 mehrere Aussparungen 50 vorgesehen, die mit Vorsprüngen des Flansches 20, beispielsweise der Lagerung der Gurtspule 14, korrespondieren.

Zur Montage der Steuerverzahnung 26 beziehungsweise der Scheibe 46 wird die Scheibe 46 in axialer Richtung auf den Flansch 20 aufgesetzt, wobei die Aussparungen 50 auf entsprechende Vorsprünge des Flansches 20 aufgesetzt werden und die Stege 48 zwischen die Zähne der Blockierverzahnung 24 eingreifen. In montiertem Zustand liegen so die Blockierverzahnung 24 und die Steuerverzahnung 26 unmittelbar aneinander an.

Die Anordnung der Steuerverzahnung 26 auf einer separaten Scheibe 46 bietet den Vorteil, dass die Zähne der Steuerverzahnung 26 separat hergestellt werden können, wodurch eine größere Genauigkeit erzielt werden kann. Insbesondere können die Zähne der Steuerverzahnung annähernd radienfrei hergestellt werden können. Dies größere Genauigkeit bei der Herstellung der Steuerverzahnung 26 ermöglicht ein wesentlich exakteres Einsteuern des Zwischenhebels 32 und somit eine wesentlich genauere, weniger streuungsbehaftete Steuerung der Blockierung des Gurtaufrollers 10.

## Patentansprüche

1. Gurtaufroller (10) für einen Fahrzeug-Sicherheitsgurt, mit einem Rahmen (12), der mit mehreren Blockierzähnen (22) versehen ist, einer Gurtspule (14), die drehbar im Rahmen (12) gelagert ist und eine Blockierverzahnung (24) aufweist, die in Eingriff mit den Blockierzähnen (22) gebracht werden kann, einem Steuerhebel (28), der schwenkbar am Rahmen (12) gelagert ist, und einem Sensor (34), der bei Überschreiten einer vorgegebenen Fahrzeugverzögerung auslöst, **dadurch gekennzeichnet, dass** der Steuerhebel (28) die Gurtspule (14) aufnimmt, und dass an der Gurtspule (14) eine Steuerverzahnung (26) vorgesehen ist, mit der der Sensor (34) zusammenwirken kann.

2. Gurtaufroller nach Anspruch 1, **dadurch gekennzeichnet, dass** ein Zwischenhebel (32) vorgesehen ist, der vom Sensor (34) in die Steuerverzahnung (26) eingesteuert werden kann.

3. Gurtaufroller nach Anspruch 2, **dadurch gekennzeichnet, dass** der Zwischenhebel (32) am Steuerhebel (28) gelagert ist.

4. Gurtaufroller nach einem der vorhergehenden Ansprüche, **dadurch gekennzeichnet, dass** die Blockierverzahnung (24) und die Steuerverzahnung (26) in axialer Richtung nebeneinander an einem Flansch (20) der Gurtspule (14) angeordnet sind.

5. Gurtaufroller nach einem der vorhergehenden Ansprüche, **dadurch gekennzeichnet, dass** die Steuerverzahnung (26) auf einer Scheibe (46) angeordnet ist, die drehfest am Flansch (20) gehalten ist.

6. Gurtaufroller nach Anspruch 5, **dadurch gekennzeichnet, dass** an der Scheibe (46) in axialer Richtung vorstehende Stege (48) vorgesehen sind, die in axialer Richtung zwischen die Zähne der Blockierverzahnung (24) eingreifen, wobei die Steuerverzahnung(26) insbesondere auf den Stegen (48) angeordnet ist.

7. Gurtaufroller nach einem der Ansprüche 4 bis 6, **dadurch gekennzeichnet, dass** die Blockierverzahnung (24) und die Steuerverzahnung (26) dieselbe Teilung haben und in derselben Ausrichtung angeordnet sind, wobei die Zähne der Steuerverzahnung (26) spitzer ausgeführt sind als die Zähne der Blockierverzahnung (24).

8. Gurtaufroller nach einem der Ansprüche 4 bis 7, **dadurch gekennzeichnet, dass** die Blockierverzahnung (24) und die Steuerverzahnung (26) dieselbe Teilung haben und in derselben Ausrichtung angeordnet sind, wobei die Zähne der Steuerverzahnung (26) schmaler ausgeführt sind als die Zähne der Blockierverzahnung (24).

9. Gurtaufroller nach einem der vorhergehenden Ansprüche, dadurch gekennzeichtnet, dass die lasttragende Seiten (40) der Blockierverzahnung (24) und der Steuerverzahnung (26) gleich ausgebildet sind und miteinander fluchten und dass die gegenüberliegenden Zahnflächen (42, 44) der Bockierverzahnung und der Steuerverzahnung unterschiedlich zueinander ausgebildet sind.

10. Gurtaufroller nach einem der vorhergehenden Ansprüche, **dadurch gekennzeichnet, dass** an der Gurtspule (14) eine Steuerklinke vorgesehen ist, die gurtbandsensitiv in eine Innenverzahnurig eingesteuert werden kann, die am Steuerhebel (28) vorgesehen ist.

11. Gurtaufroller nach einem der vorhergehenden Ansprüche, **dadurch gekennzeichnet, dass** die Zahnstärke der Steuerverzahnung (26) geringer ist als die Zahnstärke der Blockierverzahnung (24).

12. Gurtaufroller nach einem der vorhergehenden Ansprüche, **dadurch gekennzeichnet, dass** der Rahmen (12) mit zwei Seitenteilen (16) versehen ist, die jeweils mit Blockierzähnen (22) versehen sind, und dass die Gurtspule (14) an beiden axialen Seiten mit jeweils einer Blockierverzahnung (24) versehen ist.

## Claims

1. A belt retractor (10) for a vehicle seat belt, comprising a frame (12) provided with a plurality of blocking teeth (22), a belt reel (14) being rotatably supported in the frame (12) and including a blocking tooth system (24) which is adapted to be engaged in the blocking teeth (22), a control lever (28) pivoted on the frame (12) and a sensor (34) which is triggered when a predetermined vehicle deceleration is exceeded, **characterized in that** the control lever (28) accommodates the belt reel (14) and **in that** a control tooth system (26) for interaction with the sensor (34) is provided at the belt reel (14).

2. The belt retractor according to claim 1, **characterized in that** an intermediate lever (32) is provided which is adapted to be driven into the control tooth system (26) by the sensor (34).

3. The belt retractor according to claim 2, **characterized in that** the intermediate lever (32) is supported on the control lever (28).

4. The belt retractor according to any one of the preceding claims, **characterized in that** the blocking tooth system (24) and the control tooth system (26) are juxtaposed in the axial direction on a flange (20) of the belt reel (14).

5. The belt retractor according to any one of the preceding claims, **characterized in that** the control tooth system (26) is arranged on a disk (46) which is retained to be rotationally fixed to the flange (20).

6. The belt retractor according to claim 5, **characterized in that** lands (48) projecting from the disk (46) in the axial direction are provided which engage between the teeth of the blocking tooth system (24) in the axial direction, the control tooth system (26) being arranged especially on the lands (48).

7. The belt retractor according to any one of the claims 4 to 6, **characterized in that** the blocking teeth (24) and the control teeth (26) have the same pitch and are arranged at the same orientation, wherein the teeth of the control tooth system (26) are designed to be more pointed than the teeth of the blocking tooth system (24).

8. The belt retractor according to any one of the claims 4 to 7, **characterized in that** the blocking tooth system (24) and the control tooth system (26) have the same pitch and are arranged at the same orientation, the teeth of the control tooth system (26) being designed to be narrower than the teeth of the blocking tooth system (24).

9. The belt retractor according to any one of the preceding claims, **characterized in that** the load-bearing sides (40) of the blocking tooth system (24) and the control tooth system (26) are designed to be identical and are aligned with each other and **in that** the opposed tooth faces (42, 44) of the blocking tooth system and the control tooth system are designed to be different from each other.

10. The belt retractor according to any one of the preceding claims, **characterized in that** at the belt reel (14) a control pawl is provided which can be driven into an internal tooth system provided on the control lever (28) in a way sensitive to the webbing.

11. The belt retractor according to any one of the preceding claims, **characterized in that** the tooth thickness of the control tooth system (26) is smaller than the tooth thickness of the blocking tooth system (24).

12. The belt retractor according to any one of the preceding claims, **characterized in that** the frame (12) is provided with two side members (16) each being provided with blocking teeth (22), and **in that** the belt reel (14) is provided with a blocking tooth system (24) on each of the two axial sides.

## Revendications

1. Enrouleur de ceinture de sécurité (10) pour une ceinture de sécurité de véhicule, comprenant un châssis (12) qui est pourvu de plusieurs dents de verrouillage (22), une bobine de ceinture (14), qui est montée libre en rotation sur le châssis (12) et qui possède une denture de blocage (24) pouvant être mise en prise avec les dents de verrouillage (22), un levier de commande (28) qui est monté pour pivoter sur le châssis (12), et un capteur (34) qui se déclenche lorsqu'une décélération prédéterminée du véhicule est dépassée, **caractérisé en ce que** le levier de commande (28) reçoit la bobine de ceinture (14), et **en ce que** la bobine de ceinture (14) présente une denture de commande (26), avec laquelle le capteur (34) peut interagir.

2. Enrouleur de ceinture selon la revendication 1, **caractérisé en ce qu'**un levier intermédiaire (32) est prévu, et que le capteur (34) peut être commandé par la denture de commande (26).

3. Enrouleur de ceinture selon la revendication 2, **caractérisé en ce que** le levier intermédiaire (32) est monté sur le levier de commande (28).

4. Enrouleur de ceinture selon l'une des revendications précédentes, **caractérisé en ce que** la denture de blocage (24) et la denture de commande (26) sont disposées l'une à côté de l'autre axialement sur un flanc (20) de la bobine de ceinture (14).

5. Enrouleur de ceinture selon l'une des revendications précédentes, **caractérisé en ce que** la denture de commande (26) est disposée sur un disque (46), qui est maintenu solidaire en rotation avec le flanc (20).

6. Enrouleur de ceinture selon la revendication 5, **caractérisé en ce que** sur le disque (46) sont prévues axialement des nervures en saillie (48), qui s'engagent axialement entre les dents de la denture de blocage (24), sur lequel est disposée la denture de commande (26) et plus particulièrement sur les nervures (48).

7. Enrouleur de ceinture selon l'une quelconque des revendications 4 à 6, **caractérisé en ce que** la denture de blocage (24) et la denture de commande (26) ont le même pas et sont disposées selon la même orientation, dans lequel les dents de la denture de commande (26) sont plus pointues que les dents la denture de blocage (24).

8. Enrouleur de ceinture selon l'une quelconque des revendications 4 à 7, **caractérisé en ce que** la denture de blocage (24) et la denture de commande (26) ont le même pas et sont disposées selon la même orientation, dans lequel les dents de la denture de commande (26) sont plus étroites que les dents la denture de blocage (24).

9. Enrouleur de ceinture selon l'une quelconque des revendications précédentes, **caractérisé en ce que** les flancs porteurs (40) de la denture de blocage (24) et de la denture de commande (26) sont identiques et alignés l'un avec l'autre et que les surfaces opposées des dents (42, 44) de la denture de blocage et de la denture de commande sont formées différemment l'une de l'autre.

10. Enrouleur de ceinture selon l'une quelconque des revendications précédentes, **caractérisé en ce que** sur la bobine de ceinture (14) est prévu un cliquet de commande, lequel réagissant à la sangle de la ceinture peut être guidé dans une denture intérieure, lequel est prévu sur le levier de commande (28).

11. Enrouleur de ceinture de sécurité selon l'une quelconque des revendications précédentes, **caractérisé en ce que** l'épaisseur de dent de la denture de commande (26) est inférieure à l'épaisseur de dent de la denture de blocage (24).

12. Enrouleur de ceinture de sécurité selon l'une quelconque des revendications précédentes, **caractérisé en ce que** le cadre (12) est prévu avec deux parties latérales (16), qui sont chacune munie de dents de verrouillage (22), et que la bobine de ceinture (14) est prévue avec sur chacun de ces deux côtés axiaux une denture de blocage (24).
